# EUROPÄISCHE PATENTANMELDUNG

(11) **EP 0 229 290 A2**
(43) Veröffentlichungstag der Anmeldung: **22.07.1987**
(21) Anmeldenummer: 86116774.0
(22) Anmeldetag: 02.12.1986
(51) Int. Cl.: C08L 55/02, C08K 5/53

(54) **Stabilisierte thermoplastische Formmassen auf Basis von ABS-Polymeren und Acylphosphanoxiden**

(30) Priorität: 13.12.1985 DE 3544000
(71) Anmelder: BAYER AG, 51368 Leverkusen (DE)
(72) Erfinder: Meier, Helmut-Martin, Dr., D-4030 Ratingen 6 (DE); Heine, Hans-Georg, Dr,, D-4150 Krefeld 1 (DE); Pischtschan, Alfred, Dr., D-5067 Kürten (DE); Dhein, Rolf, Dr., D-4150 Krefeld 1 (DE); Rudolph, Hans, Dr., D-4150 Krefeld 1 (DE)

(57) **Zusammenfassung**

Verwendung von Acylphosphanoxiden der Formel 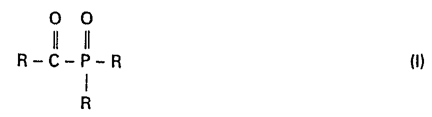 worin jedes R unabhängig vom anderen lineares oder verzweigtes C₁-C₁₂-Alkyl, Cycloalkyl odergegebenenfalls einfach oder mehrfach C₁-C₁₂-alkylsubstituiertes, alkoxysubstituiertes oder halogensubstituiertes Aryl oder Phenyl bedeuten kann, zur Verbesserung der mechanischen Eigenschaften in ABS-Formmassen.

## Beschreibung

ABS-Kunststoffe im Sinne dieser Erfindung entstehen durch Polymerisation von harzbildenden Monomeren in Gegenwart eines Kautschuks. Dabei wird ein Teil der harzbildenden Monomeren polymerisiert und gleichzeitig chemisch an den Kautschuk gebunden, ein anderer Teil wird für sich polymerisiert. Dieses Gemisch wird als Pfropfpolymerisat bezeichnet und stellt bereits einen ABS-Kunststoff dar. Solchen Pfropfpolymerisaten kann man weiteres Harz, d.h. freies Polymerisat von harzbildenden Monomeren zusetzen und damit die Eigenschaften veränderen. Auch diese Produkte werden als ABS-Kunstoff bezeichnet. Es wird also der Ausdruck "ABS", der ursprünglich Pfropfpolymerisate von Styrol und Acrylnitril auf Polybutadien bezeichnet, jetzt für sämtliche harzbildenden Monomere und sämtliche Kautschuke verwendet.

Es wurde gefunden, daß ein Zusatz von Acylphosphanoxiden der Formel I 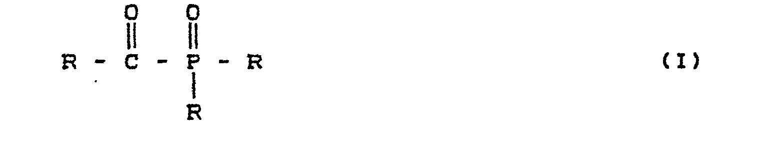 worin jedes R unabhängig vom anderen lineares oder verzweigtes C₁-C₁₂-Alkyl, Cycloalkyl oder gegebenenfalls einfach oder mehrfach C₁-C₁₂-alkylsubstituiertes, alkoxysubstituiertes oder halogensubstituiertes Aryl oder Phenyl bedeuten kann, die Thermo- und Oxidationsstabilität sowie die Schlagzähigkeit von ABS-Kunststoffen erheblich verbessert.

Gegenstand der Erfindung sind also thermoplastische Formmassen aus ABS, die gekennzeichnet sind durch einen Gehalt von 0,01 - 5 Gew.-X Acylphosphanoxiden der Formel (I) 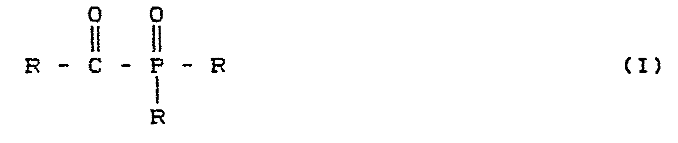 worin jedes R unabhängig vom anderen lineares oder verzweigtes C₁-C₁₂-Alkyl, Cycloalkyl oder gegebenenfalls ein- fach oder mehrfach C₃-C₁₂-alkylsubstituiertes, alkoxysubstituiertes oder halogensubstituiertes Aryl oder Phenyl bedeuten kann.

Insbesondere sind Gegenstand der Erfindung thermoplastische Formmassen, enthaltend:
I. ein ABS-Polymerisat folgender Zusammensetzung:
   A. 5-100 Gew.-%, bevorzugt 5-80 Gew.-X, eines Pfropfpolymerisats, hergestellt durch Pfropfpolymerisation von
   A1 10-95 Gew.-%, bevorzugt 10-80 Gew.-X, einer Mischung aus
   A1.1 50-90 Gew.-% Styrol, α-Methylstyrol, kernsubstituiertem Styrol oder Methylmethacrylat oder Mischungen daraus und
   Al.2 50-10 Gew.-X (Meth)Acrylnitril, Methylmethacrylat, Maleinsäureanhydrid, N-substituiertem Maleinimid oder Mischungen daraus, auf
   A2 90- 5 Gew.-%, bevorzugt 90-20 Gew-.%, eines Kautschuks mit einer Glastemperatur T_{G} ≤ 0°C und
   B. 95- O Gew.-%, bevorzugt 95-20 Gew.-%, eines thermoplastischen Copolymerisats aus
   B1. 90-50 Gew.-% Styrol, α-Methylstyrol, kernsubstituiertem Styrol oder Methylmethacrylat oder Mischungen daraus und
   B2. 50- 0 Gew.-% (Meth)Acrylnitril, Methylmethacrylat. Maleinsäureanhydrid, N-substituiertem Maleinimid und Mischungen daraus,
II. 0,05-2,0 Gewichtsteile, bezogen auf 100 Gewichtsteile (I), eines Acylphosphanoxids der Formel (I) mit den oben angegebenen Bedeutungen der Reste R.

Bevorzugte Mengen an Acylphosphanoxid der Formel (I) sind 0,2-1,0 Gewichtsteile, bezogen auf 100 Gewichtsteile (I).

Bei der Verarbeitung solcher Mischungen, insbesondere zu großflächigen Teilen können Temperaturen bis zu 300°C auftreten. Dadurch können Oberflächenstörungen in Form von Bläschen oder Schlieren und Streifen und deutliche Gelbbis Braunverfärbungen auftreten.

Durch einen Zusatz von Acylphosphanoxiden der Formel (I) werden ABS-Poplymerisatformmassen erhalten, die deutlich geringere Gelb- bis Braunfärbungen bei allen Verarbeitungstemperaturen aufweisen als unstabilisiertes oder konventionell stabilisiertes Material, Zusätzlich ergibt sich eine verbesserte Schlagzähigkeit, die nach dem Stand der Technik ebenfalls nicht vorauszusehen war.

Nach EP-A-80 664 ist die Verwendung von Trimethylbenzoyldiphenylphosphanoxid als Photoinitiator in einem Gemisch eines teilweise verseiften Polyvinylacetats und Hydroxyalkylmethacrylats bekannt. Gemäß EP-A-23 634, 73 413, 62 839 sind Acylphosphanoxide ebenfalls als Photoinitiatoren für ungesättigte Polyesterharze bekannt.

Als Thermostabilisatoren für ABS sind Ester der phosphorigen Säure gemäß EP-A-23 291 vorgeschlagen worden. Der Einsatz von Acylphosphanoxiden in thermoplastischen Formmassen aus ABS-Kunststoffen ist neu und führt zu unerwarteten Eigenschaftsverbesserungen.

Die Wirkung von Acylphophanoxiden der Formel (I) ist unerwartet, weil analoge Verbindungen wie 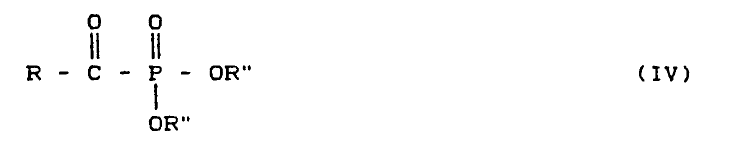 mit R" = Alkyl und R = Aryl, z.B. Benzoylphosphonsäurediethylester, sogar eine Farbverschlechterung in ABS-Polymerisaten bewirken.

Die erfindungsgemäß stabilisierten ABS-Polymerisate können 5-100 Gew.-X eines Pfropfpolymerisats (A) und 95-0 Gew,-% eines thermoplastischen Copolymerisats (Harzes) (B) enthalten.

Pfropfpolymerisate (A) im Sinne der Erfindung sind solche, in denen auf einen Kautschuk entweder ein Monomer aus der Reihe Styrol, Methylmethacrylat oder eine Monomermischung von 95-50 Gew.-% Styrol, α-Methylstyrol, kernsubstituiertes Styrol, Methylmethacrylat oder Mischungen daraus und 5-50 Gew.-% (Meth)Acrylnitril, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% eines niederen Alkylesters von Acryl-oder Methacrylsäure (z.B. Methylacrylat, Ethylacrylat, Methylmethacrylat und Ethylmethacrylat).

Weitere geeignete Kautschuke sind z. B. Polyisopren oder Polychloropren. Geeignet sind weiterhin Alkylacrylatkautschuke auf der Basis von C₁-C₈-Alkylacrylaten, insbesondere Ethyl-, Butyl-, Ethylhexylacrylat. Diese Alkylacrylatkautschuke können gegebenenfalls bis zu 30 Gew.-X Monomere, wie Vinylacetat, Acrylnitril, Styrol, Methylmethacrylat, Vinylether copolymerisiert enthalten. Diese Alkylacrylatkautschuke können weiterhin kleinere Mengen (bis zu 5 Gew.-X) vernetzend wirkender ethylenisch ungesättigter Monomerer enthalten. Solche sind z.B. Al- kylendiolditmeth)-acrylate, Polyesterdi-(meth)-acrylate, Di-, Tri-Vinylbenzol, Triallylcyanurat, Allyl-(meth)-acrylat, Butadien, Isopren etc. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern enthalten.

Bevorzugt sind Dienkautschuke.

Die Pfropfmischpolymerisate (A) enthalten 10-95 Gew.-X, insbesondere 20-70 Gew.-X, Kautschuk und 90-5 Gew.-X, insbesondere 80-30 Gew.-X, pfropfcopolymerisierte Monomere. Die Kautschuke liegen in diesen Pfropfmischpolymerisaten in Form wenigstens partiell vernetzter Teilchen eines mittleren Teilchendurchmessers (d₅₀) von 0,09 bis 5 µm, insbesondere von 0,1-1 µm, vor. Derartige Pfropfmischpolymerisate können durch radikalische Pfropfcopolymerisation von Monomeren aus der Reihe Styrol, a-Methylstyrol, kernsubstituiertem Styrol, (Meth)Acrylnitril, Methylmethacrylat, Maleinsäureanhydrid, N-substituiertem Maleinimid in Gegenwart der zu pfropfenden Kautschuke hergestellt werden. Bevorzugte Herstellungsverfahren für solche Pfropfmischpolymerisate sind die Emulsions-, Lösungs-, Masse- oder Suspensionspolymerisation.

Die Copolymerisate (B) können aus den Pfropfmonomeren für (A) oder ähnlichen Monomeren aufgebaut sein, insbesondere aus wenigstens einem Monomeren aus der Reihe Styrol, α-Methylstyrol, Halogenstyrol, Acrylnitril, Methacrylnitril, Methylmethacrylat, Maleinsäureanhydrid, Vinylacetat und N-substituiertes Maleinimid. Es handelt sich bevorzugt um Copolymerisate aus 95-50 Gew.-X Styrol, α-Methylstyrol, Methylmethacrylat oder Mischungen daraus mit 5-50 Gew.-% Acrylnitril, Methacrylnitril, Methylmethacrylat, Maleinsäureanhydrid oder Mischungen daraus. Solche Copolymere entstehen auch bei der Pfropfmischpolymerisation als Nebenprodukte. Es ist üblich, neben den im Pfropfpolymerisat enthaltenen Copolymeren noch getrennt hergestellte Copolymere zuzumischen.

Diese müssen nicht mit den in den Pfropfpolymeren vorliegenden ungepfropften Harzanteilen chemisch identisch sein.

Geeignete getrennt hergestellte Copolymere sind harzartig, thermoplastisch und kautschukfrei; es sind insbesondere Copolymere aus Styrol und/oder u-Methylstyrol mit Acrylnitril, gegebenenfalls in Mischung mit Methylmethacrylat. Besonders bevorzugte Copolymerisate bestehen aus 20-40 Gew.-X Acrylnitril und 80-60 Gew.-X Styrol oder α-Methylstyrol. Solche Copolymerisate sind bekannt und lassen sich insbesondere durch radikalische Polymerisation, insbesondere durch Emulsion-, Suspension-, Lösungs- oder Massepolymerisation herstellen. Die Copolymerisate besitzen vorzugsweise Molekulargewichte von 15 000 bis 200 000.

Die Acylphosphanoxide der allgemeinen Formel I 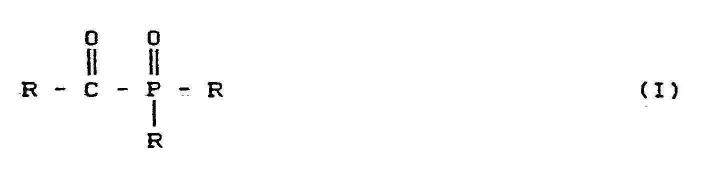 sind literaturbekannt, beziehungsweise nach literaturbekannten Verfahren herstellbar (DOS 3 139 984). Dazu setzt man ein Acylhalogenid der Formel II 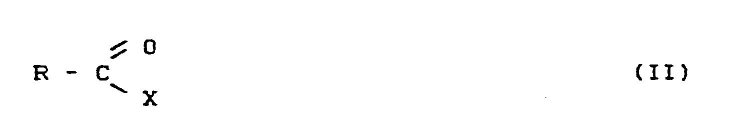 mit einem Alkoxyphosphin der Formel III 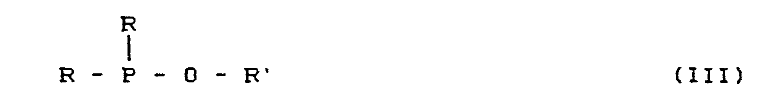 in äquimolaren Mengen bei 20-150^{o}C, gegebenenfalls in einem inerten organischen Lösungsmittel, unter Entfernung von gebildetem Alkylhalogenid um.

In den Formeln I, II, III steht unabhängig voneinander R für:
lineares oder verzweigtes C₁-C₁₂-Alkyl, wie Methyl, Ethyl, Propyl, Isopropyl, Butyl, Pentyl, Hexyl, Heptyl, Isooctyl, Nonyl, Decyl, Undecyl, Dodecyl, Cycloalkyl (z.B. mit 5-7 C Atomen) wie Cyclopentyl, Cyclohexyl, Cyclododecyl, C₁-C₁₂-alkylsubstituiertes oder halogensubstituiertes Aryl (z.B. mit 6-20 C,Atomen), wie Phenyl, o-Tolyl, p-Tolyl, 2,4,6-Trimethylphenyl, Nonylphenyl, p-tert.-Butylphenyl, 2-Cyclohexyl-4-methylphenyl, 2,4-Di-tert.-butylphenyl, Naphthyl,2-Chlorphenyl, 4-Chlorphenyl, 2,6-Dichlorphenyl, 2,6-Dimethoxyphenyl, 2,4,6-Tribromphenyl, Pentachlorphenyl und X für Chlor, Brom, Jod, Fluor.

Besonders bevorzugt ist 2,4,6-Trimethylbenzoyl-diphenylphosphanoxid.

Die erfindungsgemäßen Stabilisatoren können in jeder beliebigen Weise in die Formmassen eingearbeitet werden. Beispielsweise können sie bei Temperaturen von 180-220°C in gebräuchlichen Aggregaten wie Innenknetern, Extrudern, Doppelwellenschnecken schmelzcompoundiert werden. Hierbei können die Stabilisatoren pur oder als Konzentrat in einem der weiteren Bestandteile gelöst eingesetzt werden. Sie können auch schon bei der Herstellung zugefügt werden, beispielsweise als wäßrige Emulsion zum Latex eines ABS-Kunststoffes.

Neben den erfindungsgemäßen Stabilisatoren können den Formmassen natürlich die üblichen Zusätze wie Pigmente, Füllstoffe, Gleitmittel, Entformungsmittel und dergleichen zugesetzt werden. Es ist auch möglich, noch weitere bekannte Stabilisatoren, beispielsweise cyclische Phosphite, zuzusetzen.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind:
Gehäuseteile jeder Art (z.B. für Haushaltsgeräte wie Saftpressen, Kaffeemaschinen, Mixer) oder Abdeckplatten für den Bausektor und Teile für den Kfz.-Sektor. Sie werden außerdem auf dem Gebiet der Elektrotechnik eingesetzt, weil sie sehr gute elektrische Eigenschaften haben. Eine weitere Form der Verarbeitung ist die Herstellung von Formkörpern durch Tiefziehen aus vorher hergestellten Platten oder Folien.

Teilchengröße bedeutet immer mittlerer Teilchendurchmesser den, ermittelt durch Ultrazentrifugenmessungen nach W. Scholtan et al. Colloids. u.Z. Polymere, 250 (1972) 782-796.

### Beispiele

Eingesetzte Polymerisate
A. SAN-Pfropfpolymerisat von 50 Gew.-% Styrol-Acrylnitril-Gemisch (im Gew.-Verhältnis von 72:28) auf 50 Gew.-% teilchenförmiges Polybutadien einer mittleren Teilchengröße (d₅₀) von 0,4 µm, erhalten durch Emulsionspolymerisation.
B. Styrol-Acrylnitril-Copolymerisat mit einem Styrol-Acrylnitril-Verhältnis von 70:30 und einer Grenzviskosität von Lη] - = 0,55 dl/g (Messung in Dimethylformamid bei 20°C).

Stabilisiert wurde eine Mischung aus 40 Gew.-Teilen A und 60 Gewichtsteilen B.

Eingesetzte Stabilistatoren

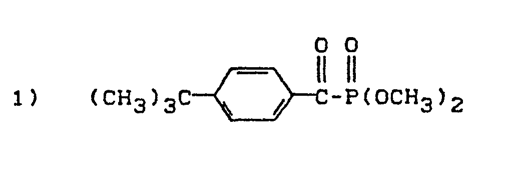

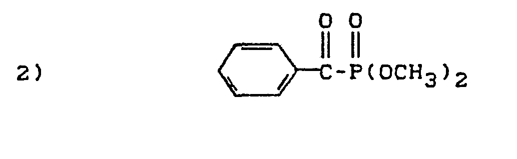

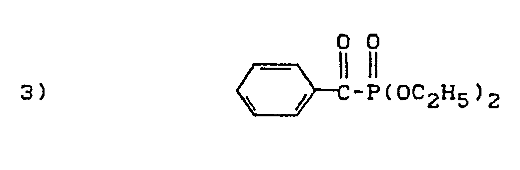

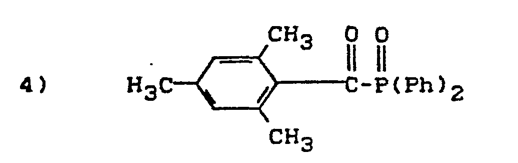

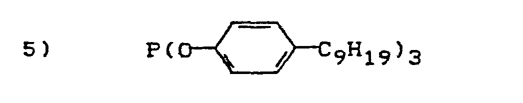

### Versuche A-F

Die Formmassen wurden durch Schmelzcompoundierung in einem Innenkneter vom BANBURY-Typ bei einer Temperatur von 200°C hergestellt.

Zur Bestimmung der Helligkeit (Rohton) der Proben wurden Musterplatten der Abmessung von 60 x 40 x 2 mm hergestellt. Das benutzte Aggregat war ein Monomat 25, wobei die Verarbeitungsbedingungen wie folgt waren:

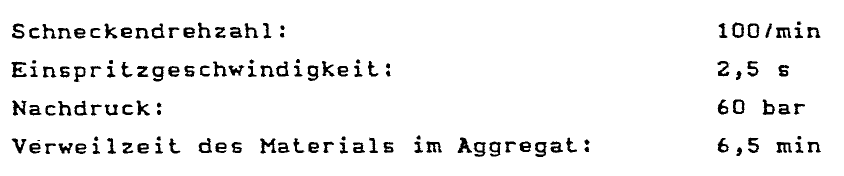

Als Spritztemperaturen wurden 220, 250, 280°C gewählt. Die Verfärbungen der erhaltenen Musterplättchen in Abhängigkeit von der jeweiligen Spritztemperatur und vom Stabilisatortyp sind in Abb. 1 wiedergegeben. Tabelle 1 enthält die Schlagzähigkeit der entsprechend stabilisierten Materialien.

Die Ergebnisse zeigen deutlich, daß der Zusatz von 4) (Versuch E) den Farbton der Formmassen und deren Schlagzähigkeit verbessert.

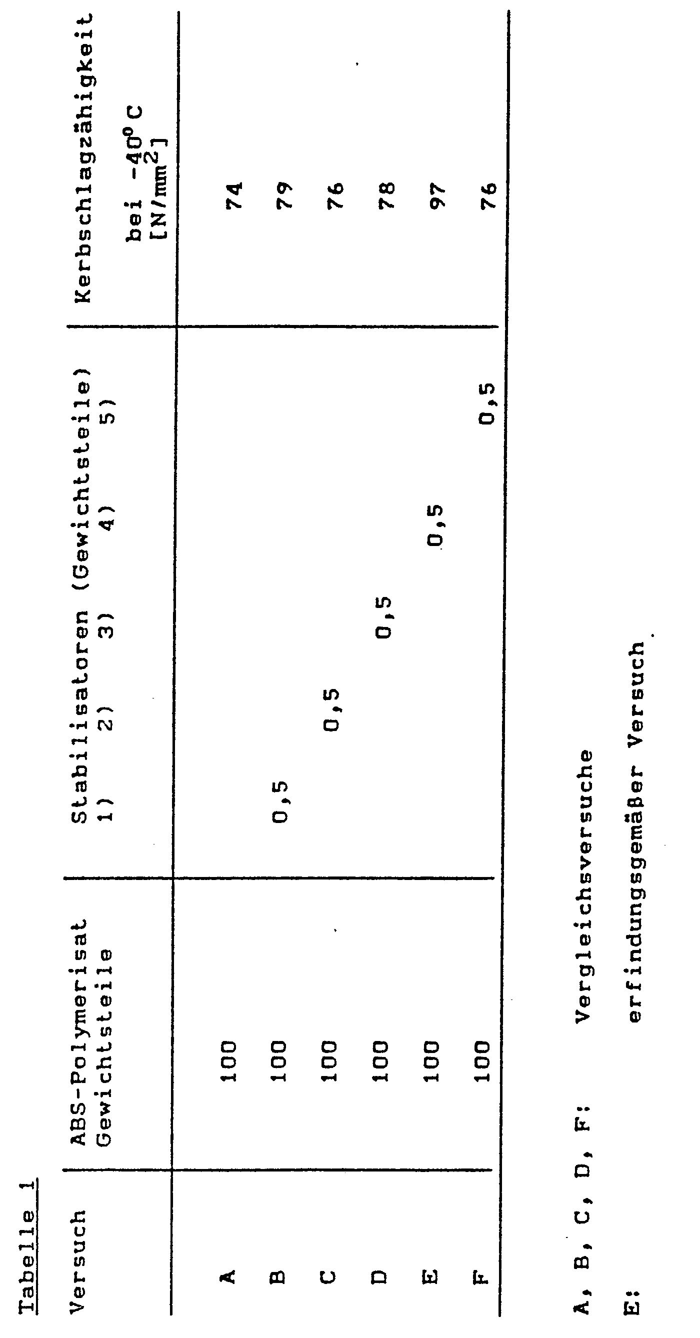

Den Verfärbungen der Musterplättchen werden folgende Zahlenwerte zugeordnet:
hell beige 1
beige 2
hell braun 3
braun 4
dunkel braun 5

Damit erhält man die

### Abbildung 1,

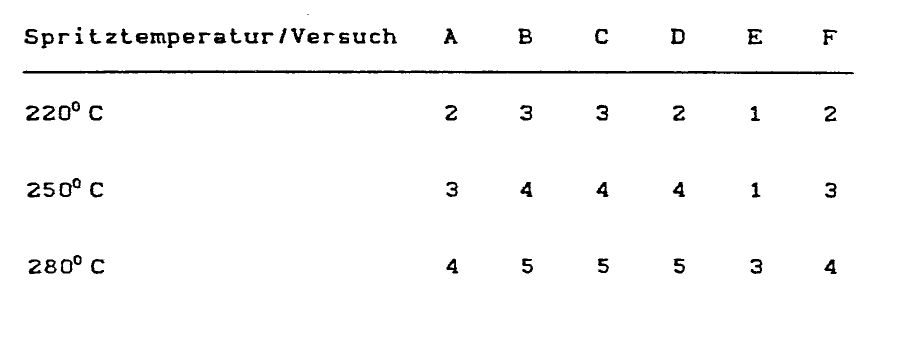

## Patentansprüche

1, Thermoplastische Formmassen aus ABS, enthaltend als Stabilisator ein Acylphosphanoxid der Formel (I) 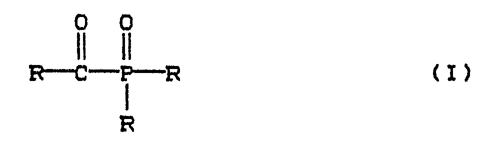 worin jedes R unabhängig vom anderen lineares oder verzweigtes C₁₋C₁₂-Alkyl, Cycloalkyl oder gegebenenfalls einfach oder mehrfach C₁-C₁₂-alkylsubstituiertes, alkoxysubstituiertes oder halogensubstituiertes Aryl oder Phenyl bedeuten.

2. Thermoplastische Formmassen enthaltend:
I. ein ABS-Polymerisat folgender Zusammensetzung:
A. 5-100 Gew.-%, eines Pfropfmischpolymerisats, hergestellt durch Pfropfpolymerisation von
A1. 10-95 Gew.-%, einer Mischung aus
A1.1. 50-90 Gew.-% Styrol, α-Methylstyrol, kernsubstituiertem Styrol oder Methylmethacrylat oder Mischungen daraus und
A1.2. 50-10 Gew.-% (Meth)Acrylnitril, Methylmethacrylat, Maleinsäureanhydrid, N-substituiertem Maleinimid oder Mischungen daraus, auf
A.2. 90-5 Gew.-%, eines Kautschuks mit einer Glastemperatur T_{g} < 0°C und
B. 95-0 Gew.-X, eines thermoplastischen Copolymerisats aus
B.1. 90-50 Gew.-% Styrol, α-Methylstyrol, kernsubstituiertem Styrol oder Methylmethacrylat oder Mischungen daraus und
B.2. 50-0 Gew.-% (Meth)Acrylnitril, Methylmethacrylat, Maleinsäureanhydrid, N-substituiertem Maleinimid und Mischungen daraus,
II. 0,05-2,0 Gewichtsteile, bezogen auf 100 Gewichtsteile I, eines Acylphosphanoxids der Formel (I) mit den Bedeutungen der Reste R gemäß Anspruch 1.
